# EUROPEAN PATENT APPLICATION

(11) **EP 4 170 952 A1**
(43) Date of publication of application: **26.04.2023**
(21) Application number: 22199028.6
(22) Date of filing: 30.09.2022
(51) Int. Cl.: H04L 5/00, H04W 74/00

(54) **SCELL CONFIGURATION IN GNB**

(30) Priority: 20.10.2021 IN 202141047560
(71) Applicant: Nokia Solutions and Networks Oy, 02610 Espoo (FI)
(72) Inventor: ARJONA, Andres, Tokyo, 153-0043 (JP); CHANDRASHEKAR, Subramanya, 560079 Bangalore (IN); ALWAR, Ethiraj, 560093 Bangalore (IN); RATOVELOMANANA, Frederic, 75018 Paris (FR); HEU, Nicolas, 89081 Ulm (DE); DE BENEDITTIS, Rossella, 89073 Ulm (DE)
(74) Representative: Nokia EPO representatives

(57) **Abstract**

In some example embodiments, there may be provided a method that includes receiving served cell information comprising a multiple input multiple output configuration for each of one or more cells served by a distributed unit of a base station; determining at least one of the one or more cells based at least in part on the multiple input multiple output configuration, the determined at least one of the one or more cells relating to at least one of a secondary cell addition or a secondary cell removal for a user equipment at the distributed unit of the base station; and sending a user equipment dedicated message comprising a request of adding or removing each of the determined at least one of the one or more cells to or from a secondary cell list for the user equipment at the distributed unit of the base station. Related apparatuses, methods, and computer-readable medium are also disclosed.

## Description

### Field

The subject matter described herein relates to wireless communications.

### Background

As the use of cellular systems including 5G or New Radio (NR) technology increases, the demands on the cellular system will increase. In some instances, the cellular system may seek to increase throughput using carrier aggregation. In carrier aggregation, multiple component carriers (e.g., frequency blocks) are allocated to a given user equipment (UE). In carrier aggregation for example, a user equipment may access a primary cell (PCell/PSCell), which may serve as an anchor cell) and access one or more secondary cells (SCells), each of which may be served by a base station, a distributed unit DU), and/or the like. The frequency band used to access the PCell/PSCell and the frequency band used to access the one or more SCells may be in the same band (e.g., intraband) or in different bands (e.g., interband). Carrier aggregation may be used in conjunction with multiple input multiple output (MIMO) technology to substantially increase the overall data rate (and thus data throughput) to or from a use equipment, when compared to approaches that do not used carrier aggregation and/or MIMO.

### Summary

In some example embodiments, there may be provided a method that includes receiving, by a central unit of a base station, served cell information from a distributed unit of the base station, the served cell information comprising a multiple input multiple output configuration for each of one or more cells served by the distributed unit of the base station; determining, based at least in part on the multiple input multiple output configuration, at least one of the one or more cells, the determined at least one of the one or more cells relating to at least one of a secondary cell addition or a secondary cell removal for a user equipment at the distributed unit of the base station; and sending, by the central unit of the base station, a user equipment dedicated message to the distributed unit of the base station, the user equipment dedicated message comprising a request of adding or removing each of the determined at least one of the one or more cells to or from a secondary cell list for the user equipment at the distributed unit of the base station.

In some variations, one or more of the features disclosed herein including the following features can optionally be included in any feasible combination. The received served cell information may be carried by at least one of an interface setup request message or a configuration update message. The multiple input multiple output configuration may further include a quantity of layers of multiple input multiple output. The quantity of layers of multiple input multiple output may include a quantity of layers of multiple input multiple output in uplink and/or a quantity of layers of multiple input multiple output in downlink.

In some example embodiments, there may be provided a method that includes sending, by a distributed unit of a base station, served cell information to a central unit of the base station, the served cell information comprising a multiple input multiple output configuration for each of one or more cells served by the distributed unit; and receiving, by the distributed unit of the base station, a user equipment dedicated message from the central unit of the base station, the user equipment dedicated message comprising a request of adding or removing each of at least one of the one or more cells to or from a secondary cell list for a user equipment at the distributed unit of the base station.

In some variations, one or more of the features disclosed herein including the following features can optionally be included in any feasible combination. In response to the received user equipment dedicated message, it further comprising at least one of following: adding one or more of the at least one of the one or more cells to the secondary cell list for the user equipment; removing another one or more of the at least one of the one or more cells from the secondary cell list for the user equipment; or sending to the central unit of the base station a cell list comprising at least one of the at least one of the one or more cells failed to add. The sent served cell information may be carried by at least one of an interface setup request message or a configuration update message. The multiple input multiple output configuration may further include a quantity of layers of multiple input multiple output. The quantity of layers of multiple input multiple output may include a quantity of layers of multiple input multiple output in uplink and/or a quantity of layers of multiple input multiple output in downlink.

The above-noted aspects and features may be implemented in systems, apparatus, methods, and/or articles depending on the desired configuration. The details of one or more variations of the subject matter described herein are set forth in the accompanying drawings and the description below. Features and advantages of the subject matter described herein will be apparent from the description and drawings, and from the claims.

### Description of Drawings

In the drawings,
FIG. 1 depicts an example of a disaggregated base station, in accordance with some example embodiments;.
FIG. 2 depicts an example of a process for providing cell MIMO configuration information to the gNB-CU, in accordance with some example embodiments;
FIG. 3A depicts an example of a process at a central unit of a base station, in accordance with some example embodiments;
FIG. 3B depicts an example of a process at a distributed unit of a base station, in accordance with some example embodiments;
FIG. 4 depicts an example of a network node, in accordance with some example embodiments; and
FIG. 5 depicts an example of an apparatus, in accordance with some example embodiments.

Like labels are used to refer to same or similar items in the drawings.

### Detailed Description

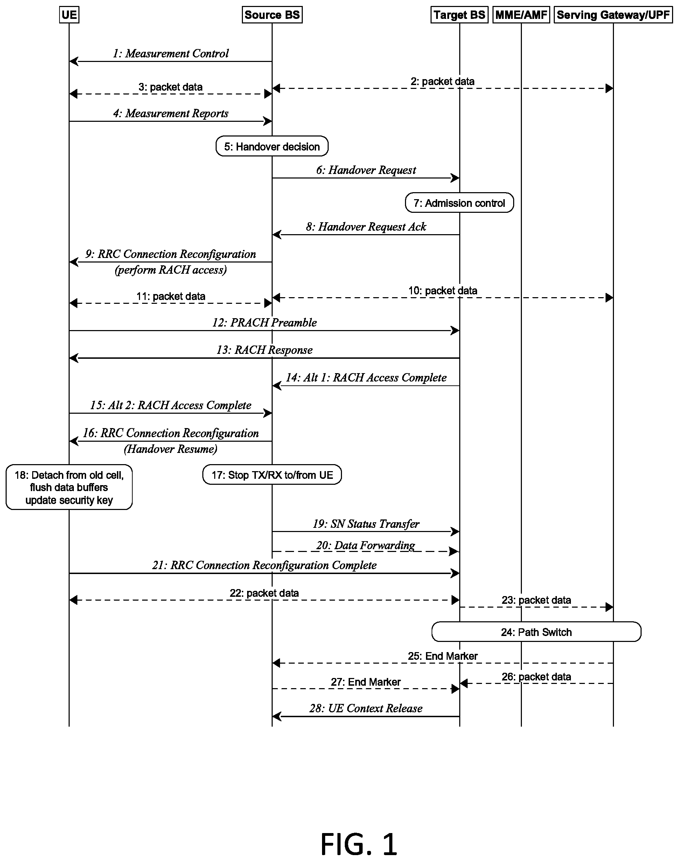

In a disaggregated architecture for a base station, the base station (e.g., a gNB) may be decomposed into a plurality of logical entities as shown in FIG. 1. The disaggregation may facilitate virtualization.

FIG. 1 depicts a disaggregated gNB base station 100 including one or more logical entities, such as a central unit (CU) which may include a gNB central unit control plane (gNB-CU-CP) entity 101A and one or more gNB central unit user plane entities 101B (gNB-CU-UP). The disaggregated gNB base station may also include or control one or more gNB distributed units 102C-D (gNB-DU) entities. The E1 interface 106A is the interface between the central unit control plane and the central unit user plane. The F1 interface is between the central unit and one or more distributed units. In the example of FIG. 1, the F1 interface includes an F1-C 106B interface between the central unit control plane and the DUs, and an F1-U interface 106C between the central unit user plane and the DUs.

The gNB distributed unit (also referred to as DU), such as DUs 102C-D, may be at least partly controlled by the gNB-CU 101A-B. And, a single gNB-DU may support (e.g., control and/or handle) one or more cells (e.g., up to 512 cells although other quantities may be implemented as well), but any given single cell is supported (or served by) only a single gNB-DU. The gNB central unit (also referred to as CU) 101A-B may handle less real-time functions. For example, the gNB-CU-CP may host the packet data convergence (PDCP), service data adaption protocol (SDAP), and radio resource control (RRC) protocols. On the other hand, the DU f may handle more real-time functions related to radio link control (RLC), medium access control (MAC), and physical (PHY) layer protocols as well as scheduling.

In the case of carrier aggregation (CA), the 3GPP framework (see, e.g., 3GPP TS 38.470, V16.5.0 (2021-07), hereinafter "TS 38.470) specifies that the carrier aggregation feature activation is a function of the gNB-CU. As noted, carrier aggregation refers to a user equipment (UE) being served by a primary cell (PCell/PSCell, which may serve as an anchor cell), while the UE is also being served by one or more secondary cells (SCells). In the case of carrier aggregation, the feature may be enabled blindly for a UE (e.g., upon the UE appearing in a cell regardless of the secondary cells signal conditions) or may be enabled based on reported measurements, such as Layer 3 (L3) measurements.

With respect to the addition or removal of secondary cells (SCells), the gNB-CU 101 may also handle the addition and removal of SCells. For example, the gNB CU may request or trigger the configuration of an SCell by a gNB-DU, although the gNB-DU may accept or reject the SCell configuration request from the gNB-CU. With a rejection however, the DU may provide to the CU a recommended list of one or more SCells (which may be neighboring alternative SCells). But it remains up to CU whether to use (or take into consideration) the recommended list received from DU. The de-configuration (e.g., removal) of an SCell may only be carried out by the gNB-CU. For example, the gNB-CU may remove, based on L3 measurement report(s), an SCell. In the case of SCell activation and deactivation of an already configured SCell, the gNB-DU (or scheduler therein) may, however, activate or deactivate an already configured SCell (e.g., the L2 MAC control element (CE) may be used for the activation or deactivation of the configured SCell).

In some instances however, the gNB-CU 101 may not be able to correctly select and configure (e.g., add) one or more SCells that would provide an optimum (e.g., better or best when compared to other cells of the DU) throughput to a given UE. Although the gNB-CU may have knowledge of the details on the bandwidth (e.g., capabilities with respect to frequency bands) of each of the cells of the gNB-DU and the UE's capabilities (e.g., general overall capabilities of a given UE with respect to support for carrier aggregation, band combinations supported, and/or MIMO capabilities), the actual MIMO configuration (e.g., as configured or supported in the gNB-DU hardware) at a given cell may be unknown to the gNB-CU (e.g., the MIMO configuration at a cell is a DU controlled subject matter and not shared with the CU prior to the instant disclosure). As such, the gNB-CU may add an SCell for a given UE, but the added SCell may not provide optimum performance for the UE, when compared to another SCell.

The following is an example of the noted problem. The UE, such as UE 186 at FIG. 1, may have an overall reported "capability" as shown in Table 1 below. The UE may report it's general capabilities when it registers with or accesses the network.

**Table 1: UE reported capability for carrier aggregation**

| |
|---|
| Maximum of 2 component carriers (CC) |
| Frequency combinations bands N1+N3 and bands N3+N9 |
| MIMO capability of 2x2 MIMO and 4x4 MIMO for any of the supported bands |

In this example, the UE 186 reports to the network (e.g., gNB-CU 101) that it can support a maximum of 2 component carriers (CC) for carrier aggregation, so the UE can only support a PCell and a single SCell. And, the UE reports its capability with respect to supporting certain combinations of frequency bands for carrier aggregation, such as bands N1+N3 (e.g., a PCell on the N1 frequency band and a SCell on N3 or vice versa) or bands N3+N9 (e.g., a PCell on the N3 frequency band and a SCell on N9 or vice versa). Moreover, the UE reports its capability with respect to MIMO in carrier aggregation, such as 2x2 MIMO and 4x4 MIMO for any of the supported bands.

The gNB-DU, such as gNB-DU 102C, may have an overall capability with respect to each of the cells 169A-C as shown in Table 2 below.

**Table 2: DU reported capability for carrier aggregation**

| |
|---|
| For cell at band N1, 20MHz with 4x4 MIMO |
| For cell at band N3, 20MHz with 2x2 MIMO |
| For cell at band N9, 20MHz with 4x4 MIMO |

The UE 186 (which reports the capabilities of at least the aspects of Table 1) may appear in band N1 of the cell 169A served by the DU 102C (having the capabilities of Table 2). This cell 169A (which is at frequency band N1) may be the serving PCell for the UE. The gNB-CU may then set up the UE's context and configures measurements for the UE in bands N3 and N9 (as the gNB-CU 101 knows these cells exist and that the UE supports them in this example). The UE may then report L3 measurements for N3 and N9 towards the gNB-CU (and these measurements may traverse transparently via the gNB-DU so the DU might not have insight into the L3 measurements). In this example, the L3 measurements for N3 and N9 are assumed to be above what is required for the SCell activation threshold. But given the N3 and N9 measurements, the gNB-CU may not be able to correctly select and configure (e.g., add) one or more SCells that would provide an optimum throughput to the UE. Here, the gNB-CU triggers the decision to add one or more SCells based on the L3 measurements, but which cells N3 169B or N9 169C are truly optimal for the UE 186 cannot be determined by the gNB-CU based on the L3 measurements alone. In other words, the gNB-CU may view the cells 169B-C at band N3 and N9 as equally viable candidate SCells with respect to throughput capacity (e.g., N3 has a bandwidth of 20MHz and N9 has a bandwidth of 20MHz). But this example shows that this is not the case. The cells 169B-C at band N3 and N9 are not equally viable candidate SCells with respect to throughput capacity because cell 169C at band N9 is configured with and supports 4x4 MIMO, while cell 169B at band N3 is configured with and supports 2x2 MIMO. If however, the gNB-CU additionally had the knowledge of the MIMO capability or configuration at the cells of the DU, the gNB-CU would deduce that the SCell with the optimal throughput capability is cell 169C at band N9, rather than N3, as N9 in this example supports 4x4 MIMO (while N3 only supports 2x2 MIMO). In this example, the gNB-CU should trigger the configuration (e.g., addition) of the SCell 169C in the N9 frequency band as it is better or more optimal with respect to throughput, when compared to the N3 frequency band.

In some example embodiments, the gNB-DU may provide, for one or more cells, information regarding the MIMO configuration information at the one or more cells.

In some example embodiments, the gNB-DU provides, for one or more cells, served cell information modified (e.g., extended) to include the MIMO configuration information. For example, the MIMO configuration information may include a cell's MIMO configuration or capability for a UE with respect to uplink and downlink layers or streams.

In some example embodiments, the MIMO configuration or capability information provided by the gNB-DU to the gNB-CU may include the quantity (e.g., number) of MIMO layers (e.g., streams) configured at the corresponding cell. For each of the cells 169A-C served by the DU 102C for example, the DU may provide to the CU 101 the downlink (DL) MIMO layers configuration, such as 2 layers (or streams), 4 layers, 8 layers, and/or the like. Likewise, the DU may provide to the CU the uplink (UL) MIMO layers configured, such as 2 layers (or streams), 4 layers, 8 layers, and/or the like, for each of the cells 169A-C. With this additional information regarding the MIMO capabilities at the cells of the DU, the gNB-CU may take this information into account to deduce (and enable the selection of) the optimal SCell(s) to be configured for carrier aggregation that may better maximize the throughput to/from the specific UE, such as UE 186, when compared to situations in which the CU does not have the actual MIMO capability information at the DU's cell(s). Referring to the previous example of FIG. 1 and Tables 1 and 2, the gNB-CU would receive the MIMO capability for at least the cells 169B-C and, as such, trigger the configuration (e.g., addition) of the SCell in the cell 169C at the N9 frequency band as it is configured with 4x4 MIMO layers (or streams), while the cell 169B at N3 is only configured for 2x2 MIMO.

In some example embodiments, the gNB-DU may provide the MIMO configuration (e.g., capability information) to the gNB-CU via a setup request message, such as the F1 setup request message, which refers to a setup message between the DU and CU that traverses the F1 interface.

In some example embodiments, the gNB-DU may provide the MIMO configuration information to the gNB-CU via a configuration message, such as the gNB configuration message, configuration update message, or F1 configuration update message. The configuration update messages is provided by the DU to the CU to update the CU with the configuration information of the cells served by the DU.

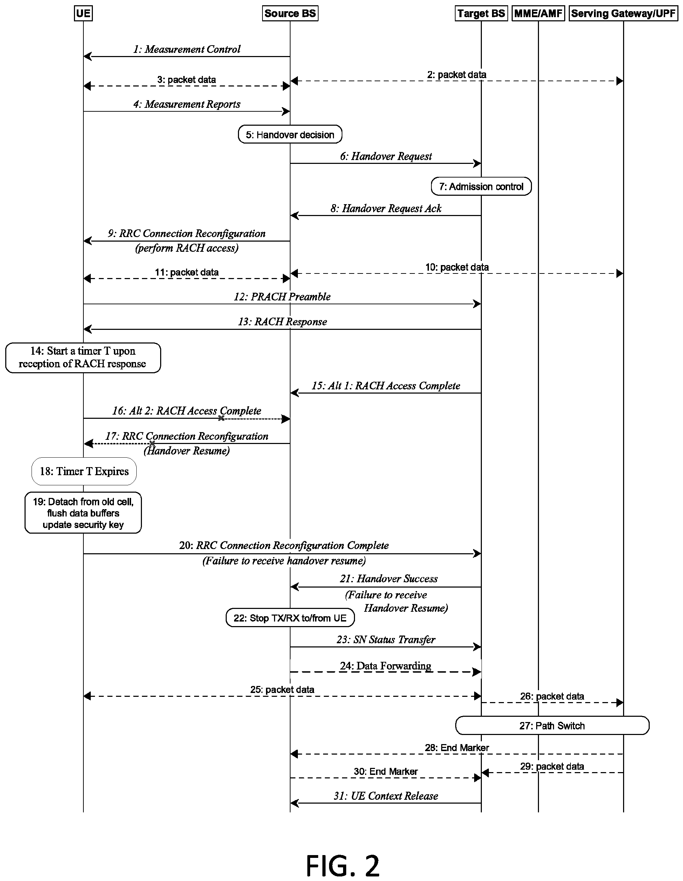

FIG. 2 depicts a signaling diagram 200 for providing to a gNB central unit MIMO configuration information for one or more cells of a gNB-DU, in accordance with some example embodiments. The signaling diagram includes a gNB-DU 202, a gNB-CU 204, a core network 206 (e.g. the 5G core network or node therein, although other core networks or nodes may be implemented as well), and a base station 208, such as a gNB or an eNB. In some example embodiments, the startup and deactivation of a cell may be performed in accordance with 3GPP TS 38.401, V16.7.0, 2021-10 (hereinafter TS 38.401), although the startup and deactivation of a cell may be performed in other ways or in accordance with other standards as well.

At 210, the gNB-DU 202 and its cells may be configured (e.g., by an operations, administration and maintenance (OAM) function) in the F1 pre-operational state. For example, the gNB-DU 202 may correspond to gNB-DU 102C, and may serve cells 169A-C, which may be configured at 210.

At 212, the DU 202 may send to the CU 204 a setup request for a given UE, in accordance with some example embodiments. For example, the DU 202 (see also e.g., DU 102C) may send a setup request message via the F1 interface (e.g., an F1 setup request message), and the setup request may include served cell information extended to include the MIMO configuration of the cell(s) 169A-C of the DU. The served cell information including the MIMO configuration may be common for one or more UEs accessing the cell.

For example, the setup request message may include a list of one or more cells, such as cells 169A-C, that are configured and ready to be activated. And for each cell, the served cell information may be extended (or modified) to include the MIMO configuration, such as the quantity of MIMO layers, at each of the cells in the list. In some example embodiments, the served cell information may be in accordance with 3GPP TS 38.473 V16.7.0 (2021-10), hereinafter TS 38.473, and may be extended to include one or more of the information elements depicted at Table 3 below.

Referring to Table 3 for example, the served cell information sent at 212 to the CU 204 may include the MIMO configuration at the cell(s) 169A-C of the DU 202/102C. The MIMO configuration information may, as noted, indicate the number of MIMO layers configured at each of the cells of the DU. Alternatively, or additionally, the MIMO configuration information indicates or includes the number of DL MIMO layers at each cell of the DU. For example, the DL MIMO layers may indicate the quantity of DL layers configured for use at a cell, such as whether the cell is configured with two layers in the DL, four layers in the downlink, eight layers in the DL, etc. Alternatively, or additionally, the MIMO configuration information indicates or includes the number of UL MIMO layers at each cell of the UL. For example, the UL MIMO layers may indicate the quantity of UL layers at a cell, such as whether the cell is configured with two layers in the UL, four layers in the UL, eight layers in the UL, etc.

Although the previous example refers to TS 38.473, the MIMO configuration for the one or more cells of a DU may be reported to the CU in other ways and/or in accordance with other standards as well.

**Table 3: Serving cell information extended to include MIMO configuration including layers at one or more cells of a DU.**

| IE/Group Name | IE tvpe and reference | Semantics description |
|---|---|---|
| MIMO Configuration | | This IE is used to convey the number of MIMO layers configured at the cell |
| > DL MIMO Layers | ENUMERATED (twoLayers, fourLayers, eightLayers, ...) | |
| > UL MIMO Layers | ENUMERATED (oneLayer, twoLayers, fourLayers, ...) | |

At 214, the gNB-CU 204 may ensure connectivity toward the core network (e.g., the 5GC 206) by for example, initiating a NG Setup or a gNB Configuration Update procedure towards 5G core 206.

At 216, the CU 204 may send a setup response message to the DU 202 to trigger configuration of certain cells of the DU based on at least the service cell information extended to include the MIMO configuration information provided at 212, in accordance with some example embodiments. Referring to the previous example of Tables 1 and 2, the gNB-DU 202/102C may provide at 212 the MIMO configuration for the cell at N9 (e.g., 4x4 layers) and cell N3 (e.g., 2x2 layers). Based at least on this MIMO configuration information, the gNB-CU may choose to request or trigger configuration of cell N9 of the DU rather than cell N3. When this is the case, the setup response message at 216 may indicate that cell configured at band N9 should be triggered for configuration (e.g., for use as an SCell for carrier aggregation). The setup response may be configured as an F1 setup response message including the one or more cells of DU 202 to be activated as an SCell, although other types of message may be used. Alternatively, or additionally, for example, the setup response message at 216 may indicate that a cell (e.g., cell N3) should be removed from the cell list of SCells for carrier aggregation.

At 218, the CU 204 may send a gNB central unit configuration update message to the DU 202, and this message may include a list of one or more cells to be activated, such as in the case that these cells were not activated using the F1 setup response message. At 220, the DU 202 may reply with a gNB-CU configuration update acknowledge message, which may include a list of one or more cells that failed to be activated. At 222, the CU may initiate an Xn setup towards a neighboring 5G radio access node (e.g., gNB 208) or an EN-DC (E-UTRAN New Radio - Dual Connectivity) X2 setup procedure towards a neighboring eNB (e.g, eNB 208).

Alternatively, or additionally, the DU 202 may send, at 230, to the CU 204 a configuration update message including served cell information extended to include MIMO configuration at one or more cells of the DU, in accordance with some example embodiments. As explained with respect to 212, the message at 230 may update the CU with the configured cells and their corresponding MIMO configuration. An interface setup (e.g., F1 setup message) may be performed only once (unless the entire RAN breaks down). If a change is needed in the MIMO configuration in one of the DUs, a DU configuration update message may be used instead.

At 234, the CU may send a configuration update message to the core network. At 236, the CU may send an acknowledgement message.

Alternatively, or additionally, the served cell information extended with the MIMO configuration at the cells of the DU as shown with respect to Table 3 may be encoded or embedded as part of the transmission bandwidth for each cell's information reported to the CU as depicted at Table 4 below.

Referring to Table 4, for a given cell of a DU, the DU may report the UL frequency information, DL frequency information, UL transmission bandwidth and corresponding MIMO layers configured at the cell (as shown in bold); the DL transmission bandwidth and corresponding MIMO layers configured at the cell (as shown in bold). In the case of time division duplex (TDD), the frequency information is provided for a cell and the transmission bandwidth as well as corresponding MIMO layers for the UL and DL configured at the cell (as shown in bold).

**Table 4: Serving cell information extended to include MIMO configuration embedded within each band.**

| IE/Group Name | | | IE tvpe and reference | Semantics description |
|---|---|---|---|---|
| *>FDD* | | | | |
| | >>FDD Info | | | |
| | | >>>UL FreqInfo | NR Frequency Info 9.3.1.17 | |
| | | >>>DL FreqInfo | NR Frequency Info 9.3.1.17 | |
| | | >>>UL Transmission Bandwidth | Transmission Bandwidth 9.3.1.15 | |
| | | **>>>> UL MIMO Layers** | **ENUMERATED (oneLayer, twoLayers, fourLayers, ...)** | **This IE indicates the maximum MIMO capability configured at the cell** |
| | | >>>DL Transmission Bandwidth | Transmission Bandwidth 9.3.1.15 | |
| | | **>>>> DL MIMO Layers** | **ENUMERATED (twoLayers, fourLayers, eightLayers, ...)** | **This IE indicates the maximum MIMO capability configured at the cell** |
| >*TDD* | | | | |
| | >>TDD Info | | | |
| | | >>>NR FreqInfo | NR Frequency Info 9.3.1.17 | |
| | | >>>Transmission Bandwidth | Transmission Bandwidth 9.3.1.15 | |
| | | **>>>> UL MIMO Layers** | **ENUMERATED (oneLayer, twoLayers, fourLayers, ...)** | **This IE indicates the maximum MIMO capability configured at the cell** |
| | | **>>>> DL MIMO Layers** | **ENUMERATED (twoLayers, fourLayers, eightLayers, ...)** | **This IE indicates the maximum MIMO capability configured at the cell** |

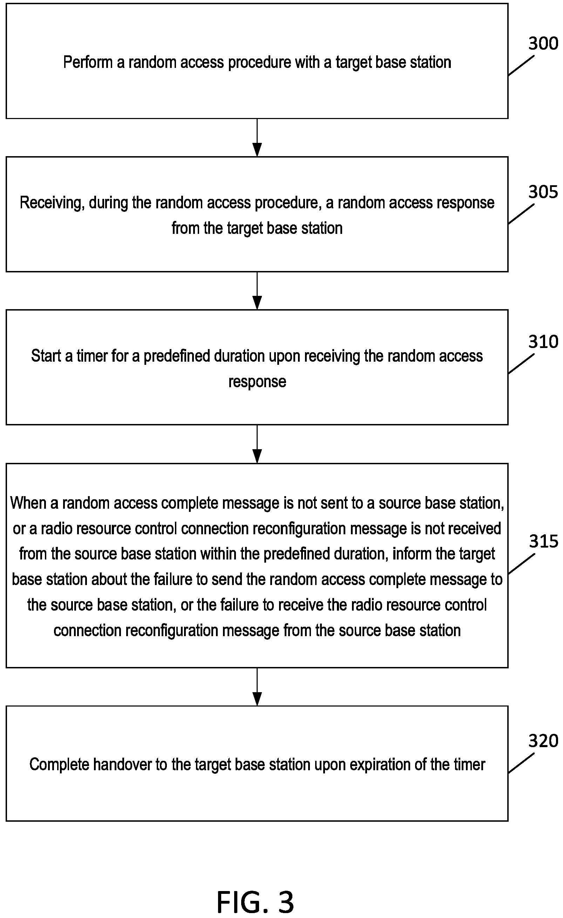

FIG. 3A depicts an example of a process at a CU, in accordance with some example embodiments.

At 302, a central unit 101/204 of a base station may receive served cell information from a distributed unit of the base station, wherein the served cell information includes a multiple input multiple output configuration for each of one or more cells served by the distributed unit. For example, the CU 101/204 may receive the served cell information extended (or modified) to include the MIMO configuration (e.g., layers configured at the cells 169A-C served by the DU 202/102C). The served cell information may include for each cell additional information as well (e.g., frequency band, cell identifiers, etc.). The served cell information may be received via a message, such as the setup request message 212, the configuration setup message 230, or other types of message.

At 304, the CU 101/204 may determine, based at least on the multiple input multiple output configuration, at least one of the cells 169A-C to add/remove. The determination of the at least one cell may relate to the addition (or removal) of at least one secondary cell (SCell) for a user equipment at the distributed unit of the base station. For example, the CU 101/204 may determine, based at least on the MIMO configuration provided by the DUs 102C-D/202, that at least one of the DU's cell (e.g., cell N9 169C with a MIMO configuration of 4x4 layers is a better cell with respect to throughput for the specific UE 186, when compared to cell N3 169B having a 2x2 MIMO configuration) should be added as a secondary cell for the UE 186 at DU 102C. Alternatively, or additionally for example, the CU 101 may determine, based at least on the MIMO configuration provided by the DUs 102C-D, that at least one of the DU's cell (e.g., cell N3 169B having a 2X2 MIMO configuration) should be removed (from a list or as a secondary cell) for the UE 186 at DU 102C as that cell 169B is less optimum than cell 169C based on the MIMO configuration. The addition or removal may add or remove cells from a cell list of secondary cells that can be used for carrier aggregation or dual connectivity. Moreover, the determination at 304 may take other factors into account as well (e.g., bandwidth, measurement reports, etc.). Furthermore, the CU 101/204 may take into account the reported capabilities of the specific UE.

At 306, the central unit 101/204 of the base station may send to the distributed unit of the base station a user equipment dedicated message, wherein the user equipment dedicated message includes a request of adding or removing the determined at least one of the one or more cells to or from a secondary cell list for the user equipment at the distributed unit of the base station. Referring to the previous example with respect to the determined at least one cell comprising cell 169C, the CU 101/204 may send to the DU 102C a request (which the DU can accept or reject) to add cell 169C to the secondary cell list for the user equipment 186 at DU 102C. The "user equipment dedicated message" refers to a message that is specific to the UE to which the SCell is being added or removed, such as UE 186, rather than a more general message that applies to a group of UEs being served by a DU or CU. Alternatively, or additionally for example, the CU 101 may send to the DU 102C a request (which the DU can accept or reject) to remove cell 169B from the secondary cell list for the user equipment 186 at DU 102C. In this example, the UE may be coupled via a primary cell at 169A and the CU may trigger configuration of a SCell 169C to provide carrier aggregation or dual connectivity. The selection of SCell 169C is based at least in part on the MIMO configuration (e.g., layers) at the SCell, when compared to the other cells 169B for example.

FIG. 3B depicts an example of a process at a DU, in accordance with some example embodiments.

At 392, the DU 102C of a base station may send served cell information to a central unit 101/204 of the base station. This served cell information may include a multiple input multiple output configuration for each of one or more cells served by the distributed unit. For example, the DU 102C may send to the CU 101 the served cell information extended (or modified) to include the MIMO configuration (e.g., MIMO layers configured at the cells 169A-C served by the DU 202/102C). The served cell information may include for each cell additional information as well (e.g., frequency band, cell identifiers, etc.). The served cell information may be provided to the CU via a message, such as the setup request message 212, the configuration setup message 230, or other types of message.

At 394, the DU 102C may receive a user equipment dedicated message from the central unit 101/204 of the base station, wherein the user equipment dedicated message includes a request of adding or removing each of the at least one of the one or more cells to or from a secondary cell list for the user equipment at the distributed unit of the base station. For example, the DU 102C may receive a request to add cell 169C to the secondary cell list for the user equipment 186 at DU 102C. Alternatively, or additionally for example, the CU 101 may send to the DU 102C a request to remove cell 169B from the secondary cell list for the user equipment 186 at DU 102C. The DU may then choose whether to trigger configuration of a SCell 169C to provide carrier aggregation or dual connectivity for UE 186. Alternatively, or additionally for example, the DU may then choose whether to remove cell 169B from the list of SCells.

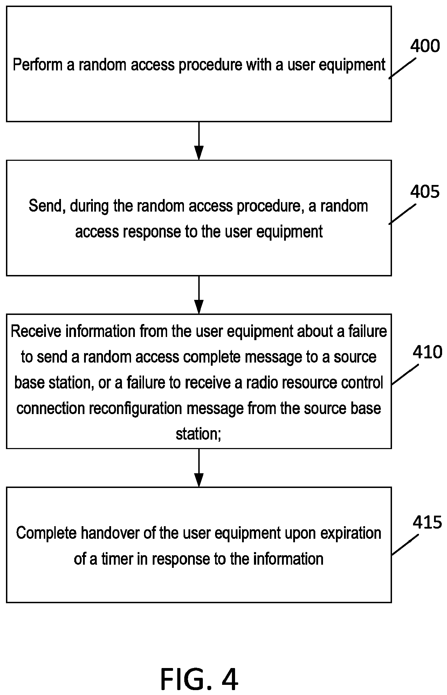

FIG. 4 depicts a block diagram of a network node 400, in accordance with some example embodiments. The network node 400 may comprise or be comprised in one or more network side nodes or functions, such as a base station (e.g., gNB, eNB, CU, DU, and/or the like).

The network node 400 may include a network interface 402, a processor 420, and a memory 404, in accordance with some example embodiments. The network interface 402 may include wired and/or wireless transceivers to enable access other nodes including base stations, other network nodes, the Internet, other networks, and/or other nodes. The memory 404 may comprise volatile and/or non-volatile memory including program code, which when executed by at least one processor 420 provides, among other things, the processes disclosed herein with respect to the network nodes.

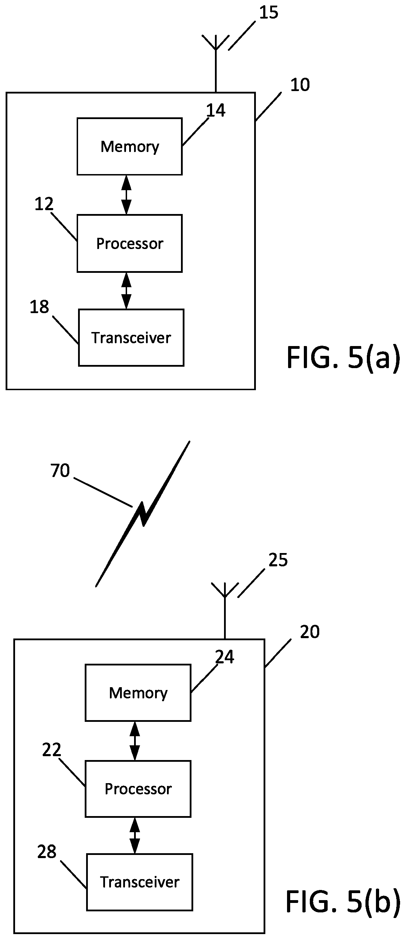

FIG. 5 illustrates a block diagram of an apparatus 10, in accordance with some example embodiments. The apparatus 10 may comprise or be comprised in a user equipment, such as user equipment 304. The user equipment may comprise or be comprised in an IoT device, an Industrial IoT device, and/or the like. In the case of an IoT device or IToT device, the UE may be configured to operate with less resources (in terms of for example power, processing speed, memory, and the like) when compared to a smartphone, for example.

The apparatus 10 may include at least one antenna 12 in communication with a transmitter 14 and a receiver 16. Alternatively transmit and receive antennas may be separate. The apparatus 10 may also include a processor 20 configured to provide signals to and receive signals from the transmitter and receiver, respectively, and to control the functioning of the apparatus. Processor 20 may be configured to control the functioning of the transmitter and receiver by effecting control signaling via electrical leads to the transmitter and receiver. Likewise, processor 20 may be configured to control other elements of apparatus 10 by effecting control signaling via electrical leads connecting processor 20 to the other elements, such as a display or a memory. The processor 20 may, for example, be embodied in a variety of ways including circuitry, at least one processing core, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits (for example, an application specific integrated circuit (ASIC), a field programmable gate array (FPGA), and/or the like), or some combination thereof. Accordingly, although illustrated in FIG. 5 as a single processor, in some example embodiments the processor 20 may comprise a plurality of processors or processing cores.

The apparatus 10 may be capable of operating with one or more air interface standards, communication protocols, modulation types, access types, and/or the like. Signals sent and received by the processor 20 may include signaling information in accordance with an air interface standard of an applicable cellular system, and/or any number of different wireline or wireless networking techniques, comprising but not limited to Wi-Fi, wireless local access network (WLAN) techniques, such as Institute of Electrical and Electronics Engineers (IEEE) 802.11, 802.16, 802.3, ADSL, DOCSIS, and/or the like. In addition, these signals may include speech data, user generated data, user requested data, and/or the like.

For example, the apparatus 10 and/or a cellular modem therein may be capable of operating in accordance with various first generation (1G) communication protocols, second generation (2G or 2.5G) communication protocols, third-generation (3G) communication protocols, fourth-generation (4G) communication protocols, fifth-generation (5G) communication protocols, Internet Protocol Multimedia Subsystem (IMS) communication protocols (for example, session initiation protocol (SIP) and/or the like. For example, the apparatus 10 may be capable of operating in accordance with 2G wireless communication protocols IS-136, Time Division Multiple Access TDMA, Global System for Mobile communications, GSM, IS-95, Code Division Multiple Access, CDMA, and/or the like. In addition, for example, the apparatus 10 may be capable of operating in accordance with 2.5G wireless communication protocols General Packet Radio Service (GPRS), Enhanced Data GSM Environment (EDGE), and/or the like. Further, for example, the apparatus 10 may be capable of operating in accordance with 3G wireless communication protocols, such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The apparatus 10 may be additionally capable of operating in accordance with 3.9G wireless communication protocols, such as Long Term Evolution (LTE), Evolved Universal Terrestrial Radio Access Network (E-UTRAN), and/or the like. Additionally, for example, the apparatus 10 may be capable of operating in accordance with 4G wireless communication protocols, such as LTE Advanced, 5G, and/or the like as well as similar wireless communication protocols that may be subsequently developed.

It is understood that the processor 20 may include circuitry for implementing audio/video and logic functions of apparatus 10. For example, the processor 20 may comprise a digital signal processor device, a microprocessor device, an analog-to-digital converter, a digital-to-analog converter, and/or the like. Control and signal processing functions of the apparatus 10 may be allocated between these devices according to their respective capabilities. The processor 20 may additionally comprise an internal voice coder (VC) 20a, an internal data modem (DM) 20b, and/or the like. Further, the processor 20 may include functionality to operate one or more software programs, which may be stored in memory. In general, processor 20 and stored software instructions may be configured to cause apparatus 10 to perform actions. For example, processor 20 may be capable of operating a connectivity program, such as a web browser. The connectivity program may allow the apparatus 10 to transmit and receive web content, such as location-based content, according to a protocol, such as wireless application protocol, WAP, hypertext transfer protocol, HTTP, and/or the like.

Apparatus 10 may also comprise a user interface including, for example, an earphone or speaker 24, a ringer 22, a microphone 26, a display 28, a user input interface, and/or the like, which may be operationally coupled to the processor 20. The display 28 may, as noted above, include a touch sensitive display, where a user may touch and/or gesture to make selections, enter values, and/or the like. The processor 20 may also include user interface circuitry configured to control at least some functions of one or more elements of the user interface, such as the speaker 24, the ringer 22, the microphone 26, the display 28, and/or the like. The processor 20 and/or user interface circuitry comprising the processor 20 may be configured to control one or more functions of one or more elements of the user interface through computer program instructions, for example, software and/or firmware, stored on a memory accessible to the processor 20, for example, volatile memory 40, non-volatile memory 42, and/or the like. The apparatus 10 may include a battery for powering various circuits related to the mobile terminal, for example, a circuit to provide mechanical vibration as a detectable output. The user input interface may comprise devices allowing the apparatus 20 to receive data, such as a keypad 30 (which can be a virtual keyboard presented on display 28 or an externally coupled keyboard) and/or other input devices.

As shown in FIG. 5, apparatus 10 may also include one or more mechanisms for sharing and/or obtaining data. For example, the apparatus 10 may include a short-range radio frequency (RF) transceiver and/or interrogator 64, so data may be shared with and/or obtained from electronic devices in accordance with RF techniques. The apparatus 10 may include other short-range transceivers, such as an infrared (IR) transceiver 66, a Bluetooth^{™} (BT) transceiver 68 operating using Bluetooth^{™} wireless technology, a wireless universal serial bus (USB) transceiver 70, a Bluetooth^{™} Low Energy transceiver, a ZigBee transceiver, an ANT transceiver, a cellular device-to-device transceiver, a wireless local area link transceiver, and/or any other short-range radio technology. Apparatus 10 and, in particular, the short-range transceiver may be capable of transmitting data to and/or receiving data from electronic devices within the proximity of the apparatus, such as within 10 meters, for example. The apparatus 10 including the Wi-Fi or wireless local area networking modem may also be capable of transmitting and/or receiving data from electronic devices according to various wireless networking techniques, including 6LoWpan, Wi-Fi, Wi-Fi low power, WLAN techniques such as IEEE 802.11 techniques, IEEE 802.15 techniques, IEEE 802.16 techniques, and/or the like.

The apparatus 10 may comprise memory, such as a subscriber identity module (SIM) 38, a removable user identity module (R-UIM), an eUICC, an UICC, U-SIM, and/or the like, which may store information elements related to a mobile subscriber. In addition to the SIM, the apparatus 10 may include other removable and/or fixed memory. The apparatus 10 may include volatile memory 40 and/or non-volatile memory 42. For example, volatile memory 40 may include Random Access Memory (RAM) including dynamic and/or static RAM, on-chip or off-chip cache memory, and/or the like. Non-volatile memory 42, which may be embedded and/or removable, may include, for example, read-only memory, flash memory, magnetic storage devices, for example, hard disks, floppy disk drives, magnetic tape, optical disc drives and/or media, non-volatile random access memory (NVRAM), and/or the like. Like volatile memory 40, non-volatile memory 42 may include a cache area for temporary storage of data. At least part of the volatile and/or non-volatile memory may be embedded in processor 20. The memories may store one or more software programs, instructions, pieces of information, data, and/or the like which may be used by the apparatus for performing operations disclosed herein.

The memories may comprise an identifier, such as an international mobile equipment identification (IMEI) code, capable of uniquely identifying apparatus 10. The memories may comprise an identifier, such as an international mobile equipment identification (IMEI) code, capable of uniquely identifying apparatus 10. In the example embodiment, the processor 20 may be configured using computer code stored at memory 40 and/or 42 to the provide operations disclosed herein with respect to the UE (e.g., one or more of the processes, calculations, and the like disclosed herein including the process at FIG. 3).

Some of the embodiments disclosed herein may be implemented in software, hardware, application logic, or a combination of software, hardware, and application logic. The software, application logic, and/or hardware may reside on memory 40, the control apparatus 20, or electronic components, for example. In some example embodiments, the application logic, software or an instruction set is maintained on any one of various conventional computer-readable media. In the context of this document, a "computer-readable storage medium" may be any non-transitory media that can contain, store, communicate, propagate or transport the instructions for use by or in connection with an instruction execution system, apparatus, or device, such as a computer or data processor circuitry; computer-readable medium may comprise a non-transitory computer-readable storage medium that may be any media that can contain or store the instructions for use by or in connection with an instruction execution system, apparatus, or device, such as a computer.

Without in any way limiting the scope, interpretation, or application of the claims appearing below, a technical effect of one or more of the example embodiments disclosed herein may include enhanced cell selection and/or increased data rate and/or throughput to a user equipment.

The subject matter described herein may be embodied in systems, apparatus, methods, and/or articles depending on the desired configuration. For example, the base stations and user equipment (or one or more components therein) and/or the processes described herein can be implemented using one or more of the following: a processor executing program code, an application-specific integrated circuit (ASIC), a digital signal processor (DSP), an embedded processor, a field programmable gate array (FPGA), and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device. These computer programs (also known as programs, software, software applications, applications, components, program code, or code) include machine instructions for a programmable processor, and may be implemented in a high-level procedural and/or object-oriented programming language, and/or in assembly/machine language. As used herein, the term "computer-readable medium" refers to any computer program product, machine-readable medium, computer-readable storage medium, apparatus and/or device (for example, magnetic discs, optical disks, memory, Programmable Logic Devices (PLDs)) used to provide machine instructions and/or data to a programmable processor, including a machine-readable medium that receives machine instructions. Similarly, systems are also described herein that may include a processor and a memory coupled to the processor. The memory may include one or more programs that cause the processor to perform one or more of the operations described herein.

Although a few variations have been described in detail above, other modifications or additions are possible. In particular, further features and/or variations may be provided in addition to those set forth herein. Moreover, the implementations described above may be directed to various combinations and subcombinations of the disclosed features and/or combinations and subcombinations of several further features disclosed above. Other embodiments may be within the scope of the following claims.

If desired, the different functions discussed herein may be performed in a different order and/or concurrently with each other. Furthermore, if desired, one or more of the above-described functions may be optional or may be combined. Although various aspects of some of the embodiments are set out in the independent claims, other aspects of some of the embodiments comprise other combinations of features from the described embodiments and/or the dependent claims with the features of the independent claims, and not solely the combinations explicitly set out in the claims. It is also noted herein that while the above describes example embodiments, these descriptions should not be viewed in a limiting sense. Rather, there are several variations and modifications that may be made without departing from the scope of some of the embodiments as defined in the appended claims. Other embodiments may be within the scope of the following claims. The term "based on" includes "based on at least." The use of the phase "such as" means "such as for example" unless otherwise indicated.

## Claims

1. An apparatus comprising:
means for receiving served cell information from a distributed unit of a base station, the served cell information comprising a multiple input multiple output configuration for each of one or more cells served by the distributed unit of the base station;
means for determining, based at least in part on the multiple input multiple output configuration, at least one of the one or more cells, the determined at least one of the one or more cells relating to at least one of a secondary cell addition or a secondary cell removal for a user equipment at the distributed unit of the base station; and
means for sending a user equipment dedicated message to the distributed unit of the base station, the user equipment dedicated message comprising a request of adding or removing each of the determined at least one of the one or more cells to or from a secondary cell list for the user equipment at the distributed unit of the base station.

2. The apparatus of claim 1, wherein the received served cell information is carried by at least one of an interface setup request message or a configuration update message.

3. The apparatus of any of claims 1-2, wherein the multiple input multiple output configuration further comprises a quantity of layers of multiple input multiple output.

4. The apparatus of claim 3, wherein the quantity of layers of multiple input multiple output comprises a quantity of layers of multiple input multiple output in uplink and/or a quantity of layers of multiple input multiple output in downlink.

5. The apparatus of any of claims 1-4, wherein the apparatus comprises, or is comprised in, a central unit of the base station.

6. An apparatus comprising:
means for sending served cell information to a central unit of a base station, the served cell information comprising a multiple input multiple output configuration for each of one or more cells served by the apparatus; and
means for receiving a user equipment dedicated message from the central unit of the base station, the user equipment dedicated message comprising a request of adding or removing each of at least one of the one or more cells to or from a secondary cell list for a user equipment at the apparatus.

7. The apparatus of claim 6, further comprising at least one of following in response to the received user equipment dedicated message:
adding one or more of the at least one of the one or more cells to the secondary cell list for the user equipment;
removing another one or more of the at least one of the one or more cells from the secondary cell list for the user equipment; or
sending to the central unit of the base station a cell list comprising at least one of the at least one of the one or more cells failed to add.

8. The apparatus of any of claims 6-7, wherein the sent served cell information is carried by at least one of an interface setup request message or a configuration update message.

9. The apparatus of any of claims 6-8, wherein the multiple input multiple output configuration further comprises a quantity of layers of multiple input multiple output.

10. The apparatus of claim 9, wherein the quantity of layers comprises a quantity of layers of multiple input multiple output in uplink and/or a quantity of layers of multiple input multiple output in downlink.

11. The apparatus of any of claims 6-10, wherein the apparatus comprises, or is comprised in, a distributed unit of the base station.

12. A method comprising:
receiving, by a central unit of a base station, served cell information from a distributed unit of the base station, the served cell information comprising a multiple input multiple output configuration for each of one or more cells served by the distributed unit of the base station;
determining, based at least in part on the multiple input multiple output configuration, at least one of the one or more cells, the determined at least one of the one or more cells relating to at least one of a secondary cell addition or a secondary cell removal for a user equipment at the distributed unit of the base station; and
sending, by the central unit of the base station, a user equipment dedicated message to the distributed unit of the base station, the user equipment dedicated message comprising a request of adding or removing each of the determined at least one of the one or more cells to or from a secondary cell list for the user equipment at the distributed unit of the base station.

13. A method comprising:
sending, by a distributed unit of a base station, served cell information to a central unit of the base station, the served cell information comprising a multiple input multiple output configuration for each of one or more cells served by the distributed unit; and
receiving, by the distributed unit of the base station, a user equipment dedicated message from the central unit of the base station, the user equipment dedicated message comprising a request of adding or removing each of at least one of the one or more cells to or from a secondary cell list for a user equipment at the distributed unit of the base station.

14. A non-transitory computer-readable storage medium including program code, which when executed by at least one processor, causes operations comprising:
receiving, by a central unit of a base station, served cell information from a distributed unit of the base station, the served cell information comprising a multiple input multiple output configuration for each of one or more cells served by the distributed unit of the base station;
determining at least one of the one or more cells based at least in part on the multiple input multiple output configuration, the determined at least one of the one or more cells relating to at least one of a secondary cell addition or a secondary cell removal for a user equipment at the distributed unit of the base station; and
sending, by the central unit of the base station, a user equipment dedicated message to the distributed unit of the base station, the user equipment dedicated message comprising a request of adding or removing each of the determined at least one of the one or more cells to or from a secondary cell list for the user equipment at the distributed unit of the base station.

15. A non-transitory computer-readable storage medium including program code, which when executed by at least one processor, causes operations comprising:
sending, by a distributed unit of a base station, served cell information to a central unit of the base station, the served cell information comprising a multiple input multiple output configuration for each of one or more cells served by the distributed unit of the base station; and
receiving, by the distributed unit of the base station, a user equipment dedicated message from the central unit of the base station, the user equipment dedicated message comprising a request of adding or removing each of at least one of the one or more cells to or from a secondary cell list for a user equipment at the distributed unit of the base station.
